# EUROPÄISCHE PATENTSCHRIFT

(11) **EP 3 008 668 B1**
(45) Veröffentlichungstag und Bekanntmachung des Hinweises auf die Patenterteilung: **29.03.2023**
(21) Anmeldenummer: 14727403.9
(22) Anmeldetag: 20.05.2014
(51) Int. Cl.: G06K 19/077

(54) **HERSTELLUNGSVERFAHREN FÜR TRAGBARE DATENTRÄGER**
PRODUCTION METHOD FOR PORTABLE DATA CARRIERS
PROCÉDÉ DE FABRICATION POUR DES SUPPORTS DE DONNÉES PORTATIFS

(30) Priorität: 14.06.2013 DE 102013009971
(43) Veröffentlichungstag der Anmeldung: 20.04.2016
(73) Patentinhaber: Giesecke+Devrient Mobile Security GmbH, 81677 München (DE); BW Papersystems Stuttgart GmbH, 72622 Nürtingen (DE)
(72) Erfinder: BANNERT, Stefan, 81673 München (DE); KAUFMANN, Peter, 81371 München (DE); PERLITZ, Lucas, 82194 Gröbenzell (DE); TARANTINO, Thomas, 83410 Laufen (DE); GRIESMEIER, Robert, 83052 Bruckmühl OT Heufeldmühle (DE); MOSTHOF, Tatjana, 81373 München (DE); REGENSBURGER, Cordula, 86938 Schondorf (DE); BOHN, Martin, 72762 Reutlingen (DE)
(86) Internationale Anmeldenummer: PCT/EP2014/001359
(87) Internationale Veröffentlichungsnummer: WO 2014/198376

(56) Entgegenhaltungen:
- WO-A1-03/000505
- DE-A1- 10 233 927
- DE-A1- 19 942 932
- DE-A1-102008 053 096
- US-A1- 2004 056 476
- US-A1- 2007 039 687
- US-A1- 2007 283 556
- US-A1- 2012 319 393

## Beschreibung

Die Erfindung beschreibt ein Herstellungsverfahren für tragbare Datenträger.

Tragbare Datenträger, wie z.B. SIM-Karten, Kreditkarten, Gesundheitskarten, Identitätskarten etc. werden gewöhnlich durch ein Spritzguß- oder ein Laminationsverfahren hergestellt.

SIM-Karten werden in der Regel durch ein Spritzgußverfahren hergestellt, welches sehr teuer ist und einen hohen Materialaufwand bedeutet. Der hohe Aufwand kommt daher, dass SIM-Karten häufig aus Karten im ID-1-Format ausgebrochen werden. Somit wird nach dem Ausbrechen der SIM-Karte der größte Teil der ID-1-Karte weg geworfen. Darüber hinaus ist die Herstellung von beispielsweise Kreditkarten quasi eine Einzelfertigung. Die quasi Einzelfertigung hat eine sequentielle manuelle Verarbeitung zur Folge, die sehr zeit- und kostenintensiv ist.

Bei der Herstellung von tragbaren Datenträgern mittels Laminationsverfahrens kommt es durch hohe Temperaturen, z.B. von 120 bis 160 Grad Celsius, und hohe Drücke, z.B. von 100 bis 250 bar, zu einer großen Belastung der Komponenten des Datenträgers. Dies führt häufig zu einer Beschädigung der Komponenten, wie z.B. Antennenspulen, Chips. Gegen solche Belastungen empfindliche Bauteile, wie z.B. Anzeigeelemente, lassen sich folglich mittels eines Laminationsverfahrens nicht verarbeiten. Ferner dauert das Laminationsverfahren relativ lange, bis sich unter Druck und Temperatur die verschiedenen Folienschichten dauerhaft miteinander verbunden haben.

DE19942932 beschreibt ein Verfahren zum Herstellen von Chipkarten auf Basis von Faltungen entlang einer Falzlinie.

Ausgehend vom Stand der Technik ist es Aufgabe der Erfindung eine Lösung zu finden, welche die oben beschriebenen Nachteile vermeidet.

Die Aufgabe der Erfindung wird durch den unabhängigen Anspruch und die nebengeordneten Ansprüche gelöst. Vorteilhafte Ausführungen sind in den abhängigen Ansprüchen beschrieben.

Zur Lösung der Aufgabe offenbart die Erfindung ein Verfahren zur Herstellung eines tragbaren Datenträgers mittels eines kontinuierlichen Herstellungsverfahrens. Als erste Schritte wird mindestens eine Folie als Rollenware bereitgestellt und mindestens eine erste Folie für das Verfahren abgerollt. Die mindestens eine erste Folie wird zumindest teilweise auf mindestens einer Seite mit einem Klebstoff beschichtet. Erfindungsgemäß kann z.B. der Klebstoff flüssig oder pastös sein. Ferner kann der Klebstoff z.B. auch in Form eines doppelseitigen Klebebands oder in jeder anderen geeigneten Form verarbeitet werden. Anschließend wird mindestens die erste Folie auf mindestens einer Seite entlang mindestens einer Falzkante angeritzt. Nach dem Anritzen wird mindestens die erste Folie entlang mindestens einer Falzkante passergenau zusammengefaltet und verklebt wird. Die Folie wird dabei so zusammengefaltet, dass die Folie in Richtung der Seite zusammen gefaltet wird, welche mit Kleber beschichtet ist. Dabei ist die mit Kleber beschichtete Seite auf der gegenüberliegenden Seite der Folie angeordnet, welche mindestens eine angeritzte Falzkante aufweist, entlang der gefaltet wird. Die vorliegende Lösung ist ein sehr schnelles Herstellungsverfahren, da es ohne lange Herstellungszeiten, wie beim Laminationsverfahren auskommt, da die Folie geklebt wird. Ebenfalls ist die Druck und Temperaturbelastung für die zu verarbeitende mindestens eine Folie deutlich geringer als beim Laminationsverfahren, da hier nur beim Auftrag des beispielsweise flüssigen Klebers sehr kurzzeitig Wärme auf die Folie übertragen wird, wobei sich der Kleber ab Kontakt mit der Folie sehr schnell abkühlt, so dass sich die Wärme nicht mehr schädlich auf z.B. die mindestens eine Folie oder elektronische Bauelemente auswirken kann. Ein besonderer Vorteil der Erfindung ist, dass eine kontinuierliche Herstellung ohne Unterbrechungen ermöglicht wird, was eine hohe Herstellungsgeschwindigkeit und damit verbunden hohe Stückzahlen pro Stunde bedeutet. Mit dem vorliegenden Verfahren ist es möglich sehr kostengünstig und schnell, beispielsweise 800 Karten pro Minute herzustellen. Diese hohe Geschwindigkeit wird durch eine Inline-Produktion mit einer Rollenzuführung erreicht. Das Verfahren ist modular aufbaubar und ermöglicht somit eine flexible Produktion. Die produzierten Karten weisen einen hohe Elastizität und somit einen geringen Verschleiß gegenüber Biegebeanspruchungen auf. Durch die Erfindung ist ein passergenaues Falten der verarbeiteten Folie möglich. Ferner gleicht das erfindungsgemäße Falten Spannungen im Inneren der Karte aus und führt somit zu einem stabileren Produkt. Durch das erfindungsgemäße Verfahren bei niedrigen Temperaturen und Drücken ist die Verarbeitung von empfindlichen Bauteilen möglich. Als Folien können kostengünstige Standardmaterialien verwendet werden, welche nicht für ein Laminieren geeignet sein müssen. Durch eine erfindungsgemäße Kombination von Kartenherstellung und z.B. Digitaldruck ist eine extrem schnelle und flexible Kartenherstellung ohne Druckformherstellung möglich. Damit können kleinste Druckauflagen in kurzer Zeit realisiert werden. Ferner ist eine personalisierte inline Kartenherstellung aufgrund der z.B. digital bedruckten Folien möglich. Zusätzlich ist eine Produktcodierung pro Karte in das Verfahren integrierbar und gewährleistet somit eine exakte Nachverfolgbarkeit der Karten. Das erfindungsgemäße Verfahren zeichnet sich insbesondere für die Herstellung von SIM-Karten durch die Vorteile auf, dass es eine hohe Materialersparnis aufweist, da direkt im SIM-Kartenformat gefertigt werden kann und im Vergleich zum Stand der Technik wenig Abfall durch die Herstellung im ID-1-Format entsteht, und eine hohe Produktionsgeschwindigkeit aufweist. Entsprechende Vorteile gelten analog für die Herstellung von z.B. Kreditkarten oder Gesundheitskarten. Dort sind große Einsparpotentiale hinsichtlich der Produktionskosten und der Produktionsdauer durch die Erfindung gegeben.

Als vorteilhaftes Ausführungsbeispiel besteht mindestens eine Folie aus mindestens einer Folienlage. Ein Folienaufbau aus mehreren Lagen ermöglicht eine gezielte Beeinflussung der Eigenschaften einer Folie, z.B. der mechanischen, elektrischen, chemischen Eigenschaften. Insbesondere die mechanischen Eigenschaften können so gezielt beeinflusst werden, z.B. kann eine Kombination von Folien hinsichtlich einer bestimmten gewünschten Elastizität gewählt werden.

Als weiteres vorteilhaftes Ausführungsbeispiel wird mindestens eine zweite Folie mit der mindestens ersten Folie passergenau verklebt. Der große Vorteil der Erfindung ist, dass theoretisch beliebig viele Folien miteinander passergenau verklebt werden können. In der Regel stellt die technische Vorrichtung, welche das erfindungsgemäße Verfahren durchführt, den begrenzenden Faktor dar. Somit wird es ermöglicht, dass mehrere gleiche oder unterschiedliche Folien miteinander passergenau verklebt werden.

Als weiteres vorteilhaftes Ausführungsbeispiel wird mindestens die erste Folie um die mindestens zweite Folie gefaltet oder die mindestens zweite Folie um die mindestens erste Folie gefaltet. Vorteilhaft daran ist, dass somit mehrschichtige Folienaufbauten aus unterschiedlichen Folien hergestellt werden können. Es können durchaus mehr als zwei miteinander verklebte und gefaltete Folien sein, z.B. drei oder vier Folien, die miteinander verklebt und gefaltet sind.

Als weiteres vorteilhaftes Ausführungsbeispiel handelt es sich bei dem Klebstoff um einen Schmelzklebstoff. Vorteilhaft an dem Schmelzklebstoff ist, dass der Schmelzklebstoff unmittelbar vor dem Auftragen auf die Folie geschmolzen und flüssig auf die Folie aufgetragen wird. Der Klebstoff kühlt sehr rasch bei Kontakt mit der Folie ab, so dass eine Gefährdung von gegen hohe Temperaturen empfindlichen Bauelementen ausgeschlossen ist.

Als weiteres vorteilhaftes Ausführungsbeispiel bindet der Klebstoff unter Einbindung von Wasser bzw. Feuchtigkeit aus der Umgebungsluft ab, z.B. mittels einer Polykondensationsreaktion. Dieser Typ von Klebstoff hat sich in den Versuchen als sehr geeignet erwiesen, da er sehr rasch abkühlt und eine sehr zuverlässige Klebeverbindung erzeugt und einfach zu handhaben ist. Eine vorteilhafte Anwendung des Klebstoffs ist bei der Herstellung von Karten, wie z.B. Kreditkarten. Insbesondere bei der Herstellung von SIM-Karten ist es vorteilhaft und technisch leicht zu realisieren statt eines Klebstoffes ein doppelseitiges Klebeband zu verwenden. Vorteilhafterweise weist das doppelseitige Klebeband einen Klebstoff auf, welcher eine Klebeverbindung ausbildet, sobald der Klebstoff mit Druck beaufschlagt wird, sogenannter Pressure Sensitive Adhesive, abgekürzt PSA. Alternativ kann der PSA auch alleine ohne doppelseitiges Klebeband verarbeitet werden.

Als weiteres vorteilhaftes Ausführungsbeispiel gleicht der verwendete Klebstoff Unebenheiten oder Höhenunterschiede aus. Diese Eigenschaft kann insbesondere dann sehr vorteilhaft genutzt werden, wenn z.B. elektronische Bauelemente integriert werden, welche zwar von Hause aus eine sehr geringe Bauhöhe haben, deren Höhenunterschied zur Umgebung aber sehr einfach mittels Klebstoff ausgeglichen werden kann um eine ebene Fläche für eine weitere Folie zu erhalten.

Als weiteres vorteilhaftes Ausführungsbeispiel wird mindestens eine Folie bedruckt. Ein weiterer großer Vorteil der Erfindung ist, dass mindestens eine Folie während des Herstellungsprozesses bedruckt werden kann. Das sieht z.B. so aus, dass die mindestens eine Folie am Drucker vorbei bewegt wird und in der Bewegung bedruckt wird, ohne die mindestens eine Folie anzuhalten. Dies ermöglicht somit ein sehr schnelles Bedrucken ohne Unterbrechung des Herstellungsablaufs.

Als weiteres vorteilhaftes Ausführungsbeispiel wird auf einer Seite mindestens einer Folie ein Vorder- und Rückseitendesign eines Datenträgers gedruckt. Vorteilhaft daran ist, dass mindestens eine Folie auf einer Seite mit sowohl dem Vorder- als auch dem Rückseitendesign eines tragbaren Datenträgers, z.B. einer Kreditkarte, bedruckt wird. Anschließend wird beispielweise die bedruckte Folie um mindestens eine weitere Folie, welche z.B. einen Kern eines Datenträgers bildet, gefaltet und mit dem Kern verklebt. Dies ermöglicht vorteilhafterweise z.B. parallel das Bedrucken einer Folie und das Herstellen eines Kerns für den Datenträger, wobei die bedruckte Folie als Außenseite zum Schluss um den Kern passergenau gefaltet und mit diesem erfindungsgemäß verklebt wird.

Als weiteres vorteilhaftes Ausführungsbeispiel wird zum Drucken ein Digitaldruck verwendet. Der Digitaldruck ermöglicht ein sehr schnelles und flexibles Bedrucken mindestens einer Folie. Der große Vorteil des Digitaldrucks ist, dass eine Druckform nicht notwendig ist. Damit können auch sehr kleine Druckaufträge schnell bearbeitet werden. Als Alternative zum Digitaldruck kann auch ein Rollen-Offsetdruck oder ein Rollensiebdruck verwendet werden.

Als weiteres vorteilhaftes Ausführungsbeispiel wird in mindestens eine Folie mindestens eine Öffnung eingebracht. Dies wird vorteilhaft genutzt, wenn beispielsweise Erhebungen ausgeglichen werden sollen, um wieder eine ebene Fläche zu erhalten. Die Erhebung befindet sich dazu innerhalb der Öffnung mindestens einer Folie.

Als weiteres vorteilhaftes Ausführungsbeispiel wird die mindestens eine Öffnung mittels eines Lasers und/ oder einer Stanze hergestellt. Vorteilhaft an einem Laser oder einer Stanze, insbesondere einer rotierenden Stanze ist, dass beide in das Herstellungsverfahren problemlos eingebunden werden können. Laser und Stanze sind sehr gut in der Lage kontinuierlich vorbei transportierte Folie in der Bewegung zu bearbeiten, ohne dass der Ablauf der Herstellung unterbrochen werden muss.

Als weiteres vorteilhaftes Ausführungsbeispiel ist auf mindestens einer Folie mindestens ein elektronisches Bauelement angeordnet. Dies ermöglicht es vorteilhafterweise die Herstellung von beispielsweise Chipkarten mit Hilfe der vorliegenden Erfindung.

Als weiteres vorteilhaftes Ausführungsbeispiel ist das elektronische Bauelement ein Chip und/ oder eine Spulenantenne und/oder ein ISO-Kontaktflächenfeld gemäß ISO 7810. Dies ermöglicht es z.B. die Herstellung von kontaktlosen und/ oder kontaktgebundenen Chipkarten mit Hilfe des vorliegenden erfindungsgemäßen Verfahrens. Neben den genannten elektronischen Bauteilen können alle anderen geeigneten Bauelemente mittels einer Folie für die Herstellung zur Verfügung gestellt werden, z.B. Anzeigeelemente.

Als weiteres vorteilhaftes Ausführungsbeispiel wird mindestens ein Datenträger passergenau aus mindestens einer gefalteten und verklebten Folie gestanzt. Der große Vorteil der Erfindung ist, dass nach der Herstellung eines Verbunds, bestehend aus mindestens einer gefalteten und verklebten Folie, in der Bewegung der Folie passergenau tragbare Datenträger aus dem Verbund ausgestanzt werden können, z.B. mittels einer rotierenden Stanze. Übrig bleibt dann von dem Verbund beispielsweise ein Gitter, welches geeignet aufgewickelt und entsorgt wird.

Als weiteres vorteilhaftes Ausführungsbeispiel handelt es sich bei dem kontinuierlichen Herstellungsverfahren um ein Rolle-zu-Rolle-Verfahren. Das Rolle-zu-Rolle-Verfahren ist das Verfahren mit den größten Vorteilen, um die vorliegende Erfindung umzusetzen. Mindestens eine Folie wird als Rollenware zur Verfügung gestellt. Die mindestens eine Folie wird abgewickelt und erfindungsgemäß verarbeitet. Nach der Verarbeitung werden beispielsweise aus dem Verbund Datenträger ausgestanzt oder der Verbund wird für weitere Verarbeitungsschritte wieder auf eine Rolle aufgewickelt. Wenn die Datenträger aus dem Verbund ausgestanzt und entnommen wurden, dann wird der verbliebene Verbund, z.B. in Form eines Gitters, als Abfall entsorgt.

Zur Lösung der Aufgabe offenbart die Erfindung ferner eine Vorrichtung zur Ausführung des oben beschriebenen Verfahrens zur Herstellung eines tragbaren Datenträgers.

Ferner offenbart die Erfindung zur Lösung der Aufgabe einen Datenträger, welcher nach dem oben beschriebenen Verfahren hergestellt wird.

Im Folgenden werden Ausführungsbeispiele der Erfindung anhand der beigefügten Figuren detailliert beschrieben.
Figuren 1 bis 3 beschreiben Verfahrensschritte für ein erstes Ausführungsbeispiel der Erfindung zur Herstellung einer Karte, die aus drei Schichten besteht.
Figur 4 zeigt prinzipiell den erfindungsgemäßen Ablauf beim Falten einer Folie anhand einer zweistufigen Faltung.
Figuren 5 und 6 beschreiben die Verfahrensschritte für ein zweites Ausführungsbeispiel des erfindungsgemäßen Verfahrens zur Herstellung einer Karte, die aus fünf Schichten besteht.
Figuren 7 bis 9 zeigen mögliche Strukturen von erfindungsgemäßen Karten, welche aus drei bis fünf Folienschichten bestehen.
Figur 10 zeigt schematisch das erfindungsgemäße Herstellungsverfahren am Beispiel zur Herstellung von Karten im ID-1-Format.

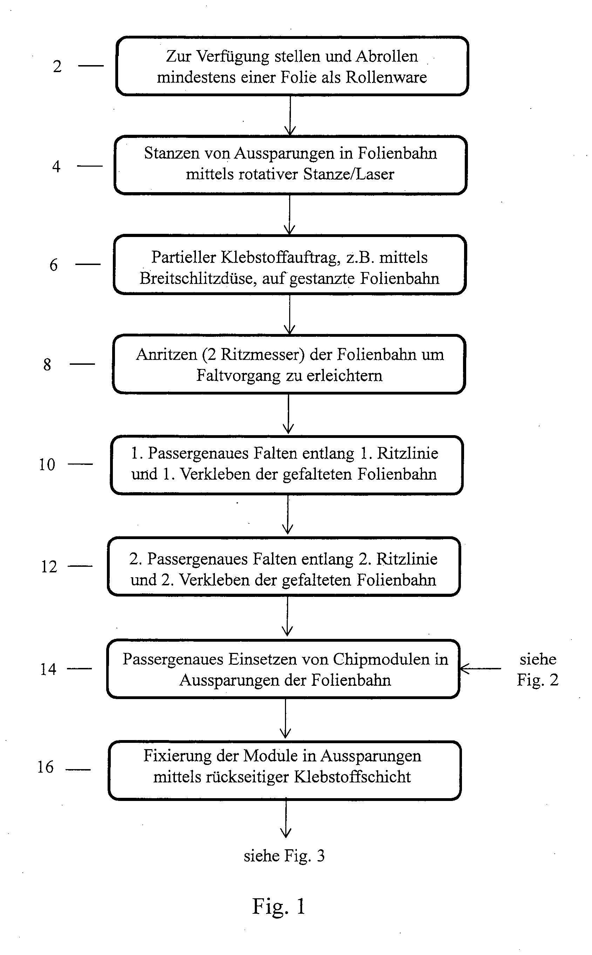

Figuren 1 bis 3 beschreiben Verfahrensschritte für ein erstes Ausführungsbeispiel der Erfindung zur Herstellung einer Karte, die aus drei Schichten besteht.

Beim erfindungsgemäßen Herstellungsverfahren handelt es sich um ein kontinuierliches Herstellungsverfahren von tragbaren Datenträgern, z.B. SIM-Karten, Kreditkarten, etc. Dazu werden Folien als Rollenware zur Verfügung gestellt. Die Folien werden abgerollt und dem Verfahren zugeführt. Während dem Verfahren werden die Folien beispielsweise mit einer Geschwindigkeit in einem Bereich von 40 bis 100 m/min bewegt. Im Verfahren werden die Folien mit Klebstoff beschichtet, passergenau zusammengefügt und passergenau gefaltet. Einzelne Folien werden zu einem Verbund verbunden, wobei der Verbund mindestens aus einer Folie besteht. Aus dem Verbund werden passergenau Datenträger ausgestanzt. Die ausgestanzten Datenträger werden in gute und schlechte Datenträger sortiert, z.B. mittels einer Weiche. Nach dem Sortieren werden die Datenträger weiter verarbeitet, z.B. personalisiert oder für weitere Verarbeitungsschritte in Magazine oder Kartonagen verpackt.

Als Basismaterial sind Kunststofffolien als Bahnmaterial im Rollenformat jeglicher Art möglich, beispielsweise PVC, welches z.B. für die Herstellung von Kreditkarten verwendet wird. Für die SIM-Kartenproduktion können beispielsweise ABS-Kunststoffe verwendet werden. Als Klebstoff eignet sich beispielsweise ein einkomponentiger, reaktiver Schmelzklebstoff, z.B. ein sogenannter PUR-Hotmelt, da sich der Schmelzklebstoff gut verarbeiten lässt und preislich relativ günstig ist. Beispielsweise kann zur Herstellung insbesondere von SIM-Karten ein Klebstoff verwendet werden, welcher unter Beaufschlagung von Druck eine dauerhafte Verbindung bewirkt, z.B. ein sogenannter Pressure Sensitive Adhesive, abgekürzt PSA.

Die mit dem Verfahren herstellten Datenträger verfügen über ein elastisches Verhalten im Vergleich zu laminierten Karten gemäß dem Stand der Technik.

Das Verfahren soll nun am Beispiel der Herstellung einer SIM-Karte erläutert werden.

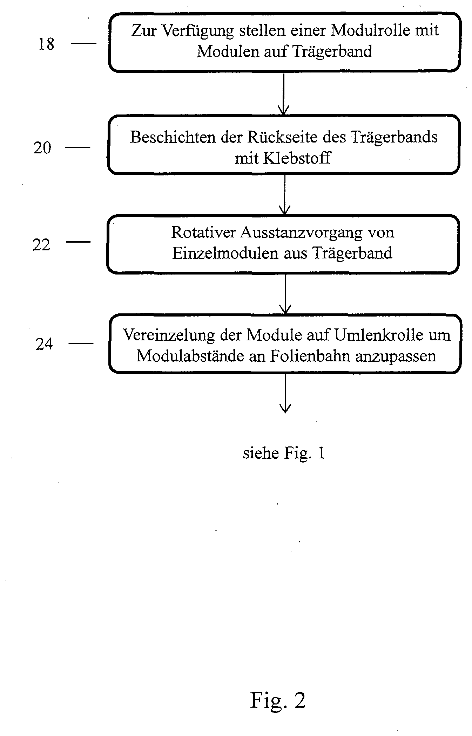

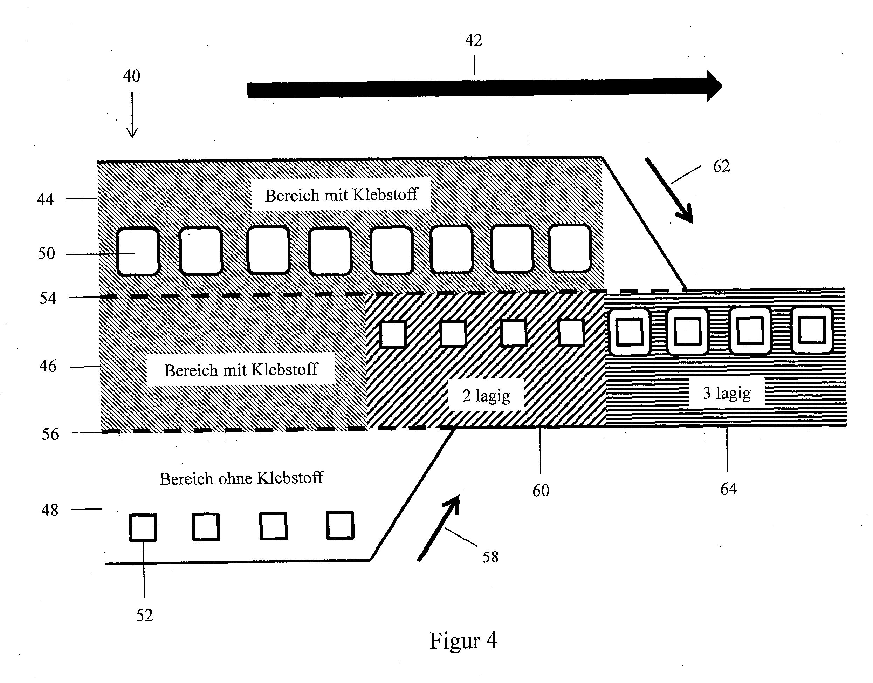

Am Anfang des Verfahrens wird mindestens eine Folie als Rollenware zur Verfügung gestellt und für das Verfahren abgerollt, siehe Schritt 2 in Figur 1. Bei der Folie handelt es sich hier um eine opake, d.h. lichtundurchlässige Folie. In die Folienbahn werden Aussparungen gestanzt, damit später an der Stelle z.B. ein Chipmodul eingesetzt werden kann, siehe Schritt 4. Zum Ausstanzen der Aussparungen kann beispielsweise eine rotative Stanze, ein Wasserstrahl oder ein Laser verwendet werden. Figur 4 zeigt ein Beispiel einer gestanzten Folie. An das Stanzen schließt sich ein zumindest partieller oder teilweiser Klebstoffauftrag auf die gestanzte Folie an, siehe Schritt 6. Der Klebstoffauftrag kann beispielsweise mittels einer Breitschlitzdüse durchgeführt werden. In diesem Ausführungsbeispiel wird mit zwei Ritzmessern die gestanzte und mit Klebstoff beschichtete Folie angeritzt, um den nachfolgenden Faltvorgang zu erleichtern, siehe Schritt 8. Die Ritzlinien sind z.B. in Figur 4 an den gestrichelten Linien 54 und 56 zu erkennen. Gleich nach dem Anritzen wird die Folie zum ersten Mal entlang der ersten Ritzlinie gefaltet und verklebt, siehe Schritt 10. Nach dem ersten Falten ist nun die Folie in einem Bereich zweilagig, wobei sich in einer Folienlage eine Ausstanzung befindet. Dies ist beispielsweise in Figur 4 im Bereich 60 gut zu erkennen. Zum Falten kann beispielsweise ein sogenannter Pflugfalzer verwendet werden. Unmittelbar auf den ersten Faltvorgang folgt der zweite Faltvorgang. Auch hier wird die Folie entlang der zweiten Ritzlinie gefaltet und verklebt, siehe Schritt 12. Aus der zu Beginn nur einlagigen Folie ist nun ein Verbund geworden, welcher aus drei Folienlagen einer Folie besteht. Die Aussparungen sind nach dem Falten so übereinander zu liegen gekommen, dass in die so entstandene Öffnung ein Chipmodul eingesetzt werden kann. Die Folie ist nun soweit vorbereitet, dass jeweils ein Chipmodul in eine Aussparung eingesetzt werden kann, siehe Schritt 14. Die Herstellung des Chipmoduls wird in Figur 2 dargestellt.

In Figur 2 wird eine Modulrolle zur Verfügung gestellt. Die Modulrolle ist eine Folienrolle, auf der sich beispielsweise Chipmodule befinden. Die Folienrolle hat insbesondere die Funktion eines Trägers, auf dessen Oberfläche optional Bauelemente, wie z.B. Antennenspulen, angeordnet sind. Alternativ können die Bauelemente auch im Inneren des Trägers angeordnet sein. Andere elektronische Bauelemente, wie z.B. eine Antennenspule, können sich ebenfalls auf der Folie befinden. Die Folie dient dabei als Trägerband für die Module, siehe Schritt 18. Wie in Figur 1 beschrieben, wird auch hier eine Seite des Trägerbands, hier die Rückseite, mit Klebstoff beschichtet, siehe Schritt 20. Die Module werden aus dem Trägerband z.B. mittels einer rotativen Stanze ausgestanzt, siehe Schritt 22. Die ausgestanzten, einzelnen Module werden auf einer Umlenkrolle angeordnet, um für das spätere Fixieren der Module in der Folie von Figur 1 die Abstände zwischen den Modulen auf der Umlenkrolle an die Abstände zwischen den Aussparungen auf der Folie von Figur 1 anzupassen, siehe Schritt 24.

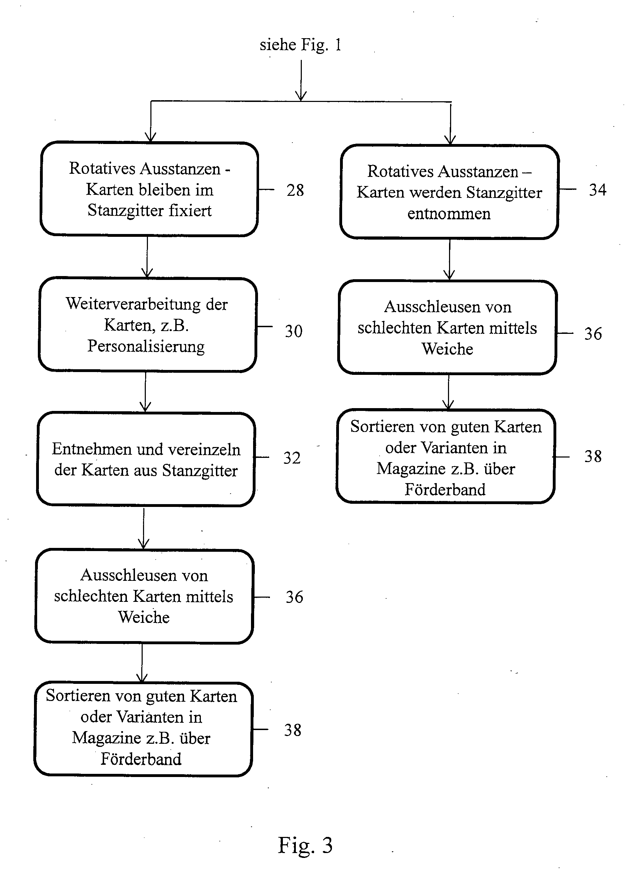

Nun können die Module passergenau in die Aussparungen der Folie von Figur 1 eingesetzt werden, Figur 1, siehe Schritt 14. Optional kann vor dem Einsetzen der Module in die Aussparungen ein zusätzlicher Klebstoff in die Aussparungen eingespendet werden, um die Module sicher zu fixieren. Mittels der rückseitigen Klebstoffschicht werden die Module in den Aussparungen fixiert, siehe Schritt 16. Für das weitere Verfahren sind in Figur 3 zwei Alternativen dargestellt.

In der ersten Alternative werden aus dem Verbund mit den fixierten Modulen Karten, z.B. SIM-Karten, zumindest teilweise ausgestanzt, wobei die Karten noch nicht ganz vom Verbund bzw. dem erhaltenen Stanzgitter getrennt sind, siehe Schritt 28. Der Sinn davon, dass die Karten nicht vollständig ausgestanzt werden, ist, dass die Karten leichter weiter verarbeitet werden können, z.B. wenn die Karten personalisiert werden, als wenn die Karten bereits vollständig vom Stanzgitter getrennt sind, siehe Schritt 30. Erst nach einer Weiterverarbeitung werden die Karten vollständig vom Stanzgitter getrennt und aus diesem entnommen, siehe Schritt 32, um die Karten beispielsweise in Magazine einzusortieren. Nach Schritt 32 werden die Karten in Schritt 36 in gute und schlechte Karten sortiert und die schlechten Karten mittels z.B. einer Weiche ausgeschleust oder aussortiert. Mit schlechten Karten sind Karten mit Herstellungsfehlern gemeint, welche auch Funktionsmängel mit einschließen. Die guten Karten, sprich die Karten ohne Herstellungsfehler und mit voller Funktion, werden in Schritt 38 z.B. nach Varianten sortiert und/oder in Magazine über z.B. ein Förderband einsortiert. Herstellungsfehler können insbesondere Fehler an der Form oder Funktion der Karte oder am Design der Karte sein. Fehler der Funktion können z.B. ein defekter Chip oder eine defekte Antennenspule sein, welcher z.B. mittels einer elektrischen Prüfeinrichtung bestimmt wird. Fehler am Design kann z.B. ein Druckfehler des Designs sein, welcher z.B. mittels einer Bildverarbeitung festgestellt wird.

Die zweite Alternative beschreibt in Schritt 34 ein rotatives Ausstanzen und Entnehmen der Karten aus dem Stanzgitter. Die Karten werden passergenau ausgestanzt. Anschließend werden die Karten, wie bereits oben bei den Schritten 36 und 38 beschrieben, weiter verarbeitet.

Figur 4 zeigt prinzipiell den erfindungsgemäßen Ablauf beim Falten einer Folie anhand einer zweistufigen Faltung. Eine Folie 40 wird während des Verfahrens in Maschinenlaufrichtung 42 transportiert. Die Folie 40 weist hier drei Bereiche 44, 46 und 48 auf. Die Bereiche 44 und 48 weisen jeweils mehrere Aussparungen 50 und 52 auf, welche in die Folie 40 gestanzt wurden. Die Aussparungen 50 und 52 dienen zur Bildung einer Aussparung, in welche ein Modul, z.B. ein Chipmodul eingesetzt wird. Die Bereiche 44 und 46 sind mit Klebstoff beschichtet. Vor dem erfindungsgemäßen Falten der Folie 40 werden zwei Ritzlinien 54 und 56 in die Folie 40 geritzt, um das folgende Falten zu erleichtern. Zuerst wird der Bereich 48 in Richtung 58 entlang der Ritzlinie 56 gefaltet, damit der Bereich 48 auf dem mit Klebstoff beschichteten Bereich 46 passergenau zu liegen kommt und mit diesem verklebt wird. Der damit entstandene Bereich 60 ist zweilagig und weist an seiner Oberfläche die Aussparungen 52 auf. Als nächstes wird in Richtung 62 der Bereich 44 entlang der Ritzlinie 54 auf den Bereich 60 passergenau gefaltet und mit diesem verklebt. Es ist nun im Bereich 64 eine drei lagige Folie entstanden. Die Bereiche 44, 46 und 48 sind passergenau aufeinander gefaltet und miteinander verklebt worden, so dass beispielsweise die Aussparungen 50 und 52 genau übereinander zu liegen gekommen sind. Spannungen in der entstanden Karte heben sich durch das erfindungsgemäße Verfahren bei einer ungeradzahligen Faltung, z.B. einfache oder dreifache Faltung, auf. Orientierungen, die möglicherweise in der mindestens einen Folie vorliegen, gleichen sich durch das erfindungsgemäße Falten aus. Eine daraus resultierende Wölbung oder ein Verzug des Produktes wird dadurch vermieden. Zusätzlich zu dem oben beschriebenen Verfahren ist es möglich eine weitere Folie während des Faltens passergenau einzuführen und mit zu verkleben. Somit sind Aufbauten aus mehreren Folienlagen und Klebstoffschichten realisierbar. Dies ist insbesondere interessant, falls Aussparungen auf unterschiedlicher Ebene, unabhängig von der Materialdicke einer Folie, nötig sind.

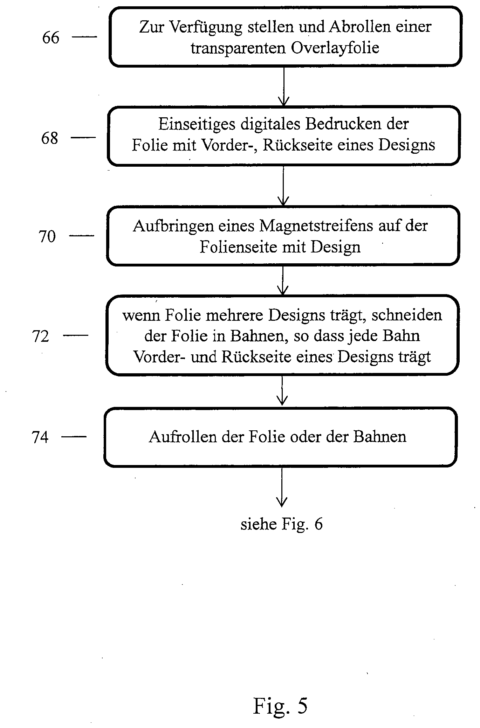

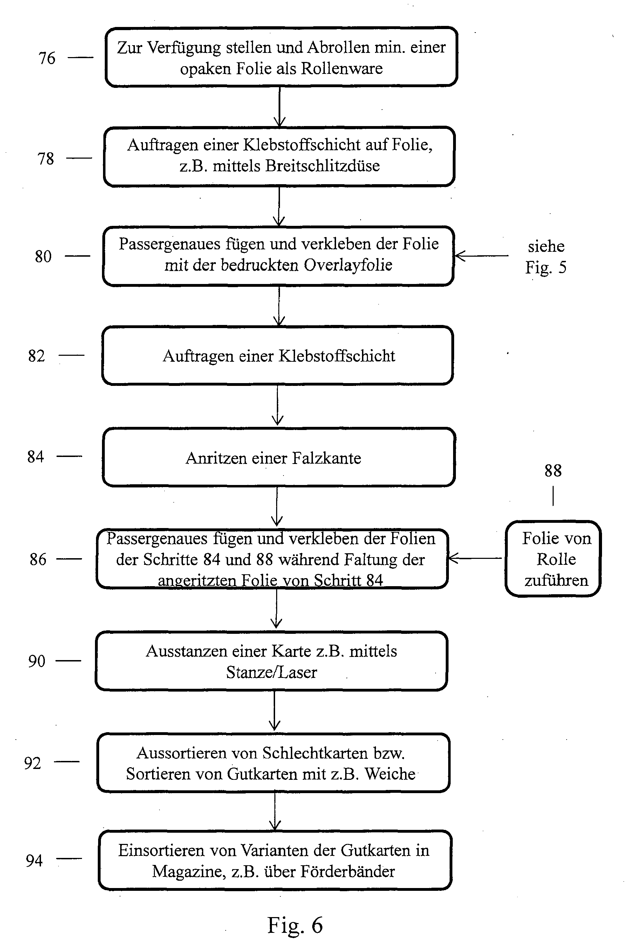

Figuren 5 und 6 beschreiben die Verfahrensschritte für ein zweites Ausführungsbeispiel des erfindungsgemäßen Verfahrens zur Herstellung einer Karte, die aus fünf Schichten besteht.

In Figur 5, Schritt 66 wird eine transparente, d.h. lichtdurchlässige Overlayfolie als Rollenware zu Verfügung gestellt und für das Verfahren abgerollt. Die Overlayfolie wird auf mindestens einer Außenseite der Karte angeordnet. Alternativ kann auch eine opake Overlayfolie verwendet werden.

Auf eine Seite der Folie wird mittels Digitaldruck ein Design einer Vorder- und Rückseite eines Datenträgers aufgedruckt, siehe Schritt 68. Prinzipiell kann die Folie teil- oder vollflächig von Rolle bedruckt werden. Neben dem Digitaldruck ist alternativ beispielsweise ein Druck mit Metallicfarben oder Spezialfarben im Siebdruck- oder Offsetverfahren möglich. Nach dem Bedrucken der Folie wird in Schritt 70 mindestens ein Magnetstreifen auf der gegenüberliegenden Seite der Folie aufgebracht, auf die das Design gedruckt wurde. Optional kann der Magnetstreifen auch auf der Seite aufgebracht werden, auf der das Design gedruckt wurde. Der Magnetstreifen kann sowohl auf der Außenseite als auch auf der Innenseite der Karte angeordnet werden. Falls auf die Folie mehrere gleiche oder unterschiedliche Designs parallel zueinander aufgebracht wurden, dann wird die Folie in Schritt 72 in Bahnen geschnitten, so dass jede Bahn ein einziges Design, bestehend aus Vorder- und Rückseite, trägt. Nach dem Schneiden wird die Folie oder gegebenenfalls werden die Bahnen in Schritt 74 wieder aufgerollt, um sie später weiterzuverarbeiten. Alternativ zu Schritt 74 können die Folie oder die Bahnen ohne Aufrollen auch direkt weiterverarbeitet werden. Hier wird die Overlayfolie in Schritt 80, Figur 6 mit einer Inlettfolie weiterverarbeitet. Die Inlettfolie ist eine Folie, die im Inneren der Karte angeordnet wird, die auch als Kernfolie bezeichnet wird. Falls auf der Inlettfolie ein Bauelement angeordnet ist, z.B. eine Antennenspule oder ein Chip, dann spricht man von einer Inlayfolie.

Die Inlettfolie wird in Schritt 76, Figur 6 erfindungsgemäß als Rollenware zur Verfügung gestellt und für das Verfahren abgerollt. In diesem Beispiel handelt es sich um eine opake Inlettfolie. Nach dem Abrollen der Folie wird in Schritt 78 eine Klebstoffschicht auf eine Seite der Inlettfolie aufgetragen, beispielsweise mittels einer Breitschlitzdüse. In Schritt 80 werden dann die Inlettfolie und die Overlayfolie von Schritt 74 beispielsweise passergenau miteinander verbunden bzw. gefügt und miteinander verklebt. Die Overlayfolie wird dazu wieder von der Rolle abgerollt und dem Verfahren in Schritt 80 zur Verfügung gestellt. Auf den Verbund bzw. die Folie, bestehend aus Inlettfolie und Overlayfolie, wird in Schritt 82 wieder eine Klebstoffschicht aufgetragen, beispielsweise auf der Seite der Inlettfolie. Anschließend wird die Folie, bestehend aus Inlettfolie und Overlayfolie, in Schritt 84 beispielsweise auf der Seite angeritzt, welche der Seite gegenüberliegt, die nach dem Falten mit sich selbst verklebt wird, so dass nach dem Falten und Kleben eine außenliegende angeritzte Seite gegenüber einer innenliegenden Falzkante, um die gefaltet wird, liegt, und in Schritt 86 passergenau mit einer Inlayfolie, welche in Schritt 88 von einer Rolle abgewickelt dem Verfahren zu Verfügung gestellt wird, während dem Falten der Folie verbunden und verklebt. In Schritt 90 wird aus der Folie, bestehend aus transparenten Overlayfolie, opaken Inlettfolie und der Inlettfolie von Schritt 88, eine Karte als Datenträger ausgestanzt, z.B. mittels Laser oder rotierender Stanze. Zum Ausstanzen kann jedes geeignete Verfahren verwendet werden, z.B. auch Schneiden mit einem Wasserstrahl. Die ausgestanzten Karten werden in Schritt 92 nach guten, d.h. verwendungsfähigen, und schlechten, d.h. nicht verwendungsfähigen Karten, sortiert, z.B. mittels einer Weiche. Die guten Karten werden dann in Schritt 94 entsprechend ihren Varianten in Magazine einsortiert, z.B. mittels Förderbändern.

Vor einem Zuführen von Materialien, wie z.B. in Schritt 80, kann ein Stanzvorgang integriert werden, um eine zu verarbeitende Folie eine bestimmte äußere Form zu geben oder um Bereiche innerhalb der Folie auszustanzen.

Vor dem Fügen und Verbinden von mindestens zwei Folien, hier z.B. bei Schritt 86, können sich zum Reaktivieren des Klebstoffs Heizelemente befinden.

Beim Auftragen des Klebstoffs, z.B. bei Schritt 78 oder 82, kann es sich um unterschiedliche Klebstoffe und Auftragdicken von Klebstoff handeln, um z.B. Unebenheiten im Material auszugleichen oder um unterschiedliche Materialen zu verkleben.

Bei Schritt 66 oder vor Schritt 90 ist ein zusätzliches Druckmodul, z.B. ein Tintenstrahldrucker mit Fluoreszenzfarbe oder normalen Farbe, möglich, der inline pro Karte eine Codierung zur Weiterverfolgung oder Kontrolle aufbringt. Nach Schritt 90 liest dann ein Leser die z.B. für das menschliche Auge unsichtbare Codierung und sortiert über z.B. eine Weichensteuerung die Karten und leitet diese bestimmten Magazinen oder Kartons zu.

Bei Schritt 90 ist nicht nur das Ausstanzen einer Außenkontur möglich, sondern auch das Ausstanzen jeglicher Formen, einschließlich Aussparungen innerhalb der Karte.

Zur Produktion ist prinzipiell jede Breite einer Rollenware möglich, sie wird letztlich nur durch die Maschine beschränkt, auf der das Verfahren ausgeführt wird. Dies bedeutet aber auch, dass pro Folienbahn z.B. zwei oder drei Karten nebeneinander parallel verarbeitet und letztlich ausgestanzt werden. Die Maschine muss nur entsprechend angepasst werden. Dies hat allerdings deutliche Vorteile hinsichtlich Stückzahl und Geschwindigkeit bei der Herstellung von Karten.

Alternativ dazu, dass wie in Schritt 66 oder 76 von Rolle eine Folie abgerollt und zur Verfügung gestellt wird, kann eine Extrusionsanlage direkt mit dem Verfahren verbunden sein, so dass z.B. über eine Breitschlitzdüse speziell für einen Auftrag extrudiertes Folienmaterial inline in das Verfahren eingespendet wird.

Prinzipiell können unterschiedlichste Rollenwaren und auch Materialien von Rolle verarbeitet werden. Dabei kann mindestens eine Folienlage verarbeitet werden, z.B. zwei, drei oder vier Lagen.

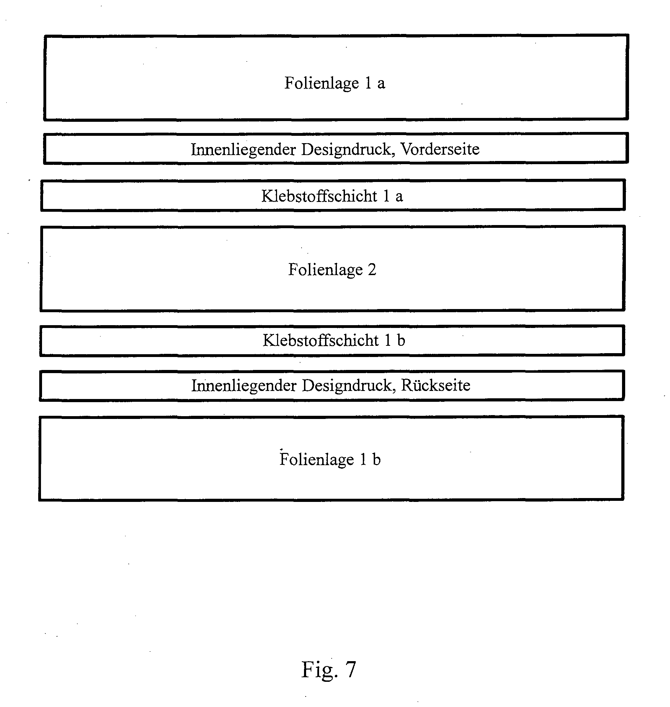

Figuren 7 bis 9 zeigen mögliche Strukturen von erfindungsgemäßen Karten, welche aus drei bis fünf Folienschichten bestehen.

Figur 7 offenbart eine dreilagige Struktur eines Kartenkörpers, die aus Folienlage 1a, 1b und Folienlage 2 besteht, wobei die Folienlage 1 um die Folienlage 2 gefaltet wurde. Die Folienlage 2 bildet hier eine innere Folienlage oder eine sogenannte Mittelschicht. Die Folienlage 1 ist eine transparente Folie, die auf ihrer Innenseite jeweils mit einer Vorder- und Rückseite eines Designdrucks einer Karte versehen wurde. Die beiden Folienlagen sind mit den Klebstoffschichten 1a und 1b miteinander verbunden. Bei den Klebstoffschichten 1a und 1b handelt es sich ebenfalls um eine Klebstoffschicht, die nur um die Folienlage 2 gefaltet wurde.

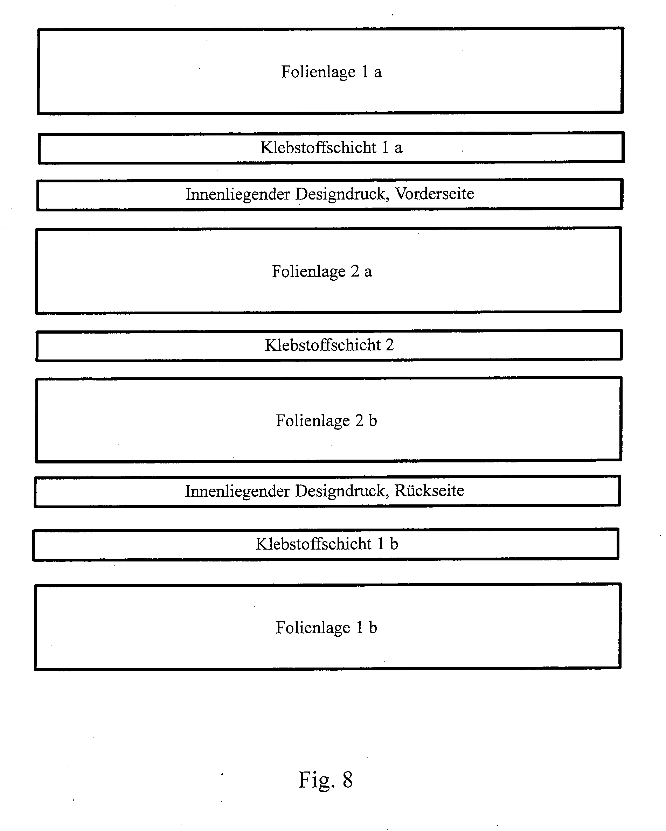

Figur 8 zeigt eine vierlagige Struktur eines Kartenkörpers. Figur 8 unterscheidet sich von Figur 7 dadurch, dass sie zwei im Inneren der Karte angeordnete Folienlagen 2a und 2b aufweist. Auf der Oberfläche und/oder im Inneren der Folienlagen 2a und 2b können Bauelemente, z.B. Antennenspulen, Chip, etc, angeordnet sein. Ein weiterer Unterschied zu Figur 7 ist, dass nicht die äußere Folie bedruckt ist, sondern die die inneren Folienlagen 2a und 2b. Hier wurde die Folienlage 2 einmal gefaltet und mit sich selbst verklebt, so dass die Folienlagen 2 a und 2 b zu einer Folienlage 2 gehören. Die Folienlage 1 wurde passergenau um die gefaltete Folienlage 2 gefaltet. Für die Folienlagen 1 a und 1 b gilt das Entsprechende wie für Folienlage 2.

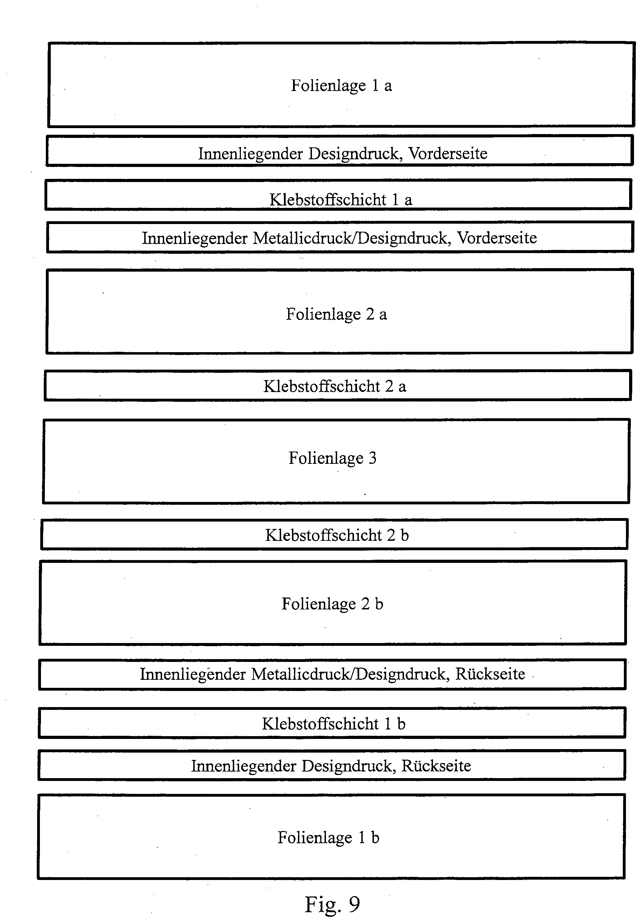

Figur 9 offenbart eine fünfschichtige Struktur eines Kartenkörpers. Die Struktur weist zwei äußere Folienlagen 1 und 2 und eine zusätzliche innere Folienlage 3 und jeweils zwei Druckschichten auf. Bei den Folienlagen 1a und 1b handelt es sich um eine Folienlage, die gefaltet wurde. Dies gilt entsprechend für die Folienlagen 2a und 2b. In Figur 9 ist sowohl auf der Folienlage 2 ein innenliegender Metallicdruck/Designdruck als auch auf der Folienlage 1 ein innenliegender Designdruck jeweils mit Vorder- und Rückseite angeordnet.

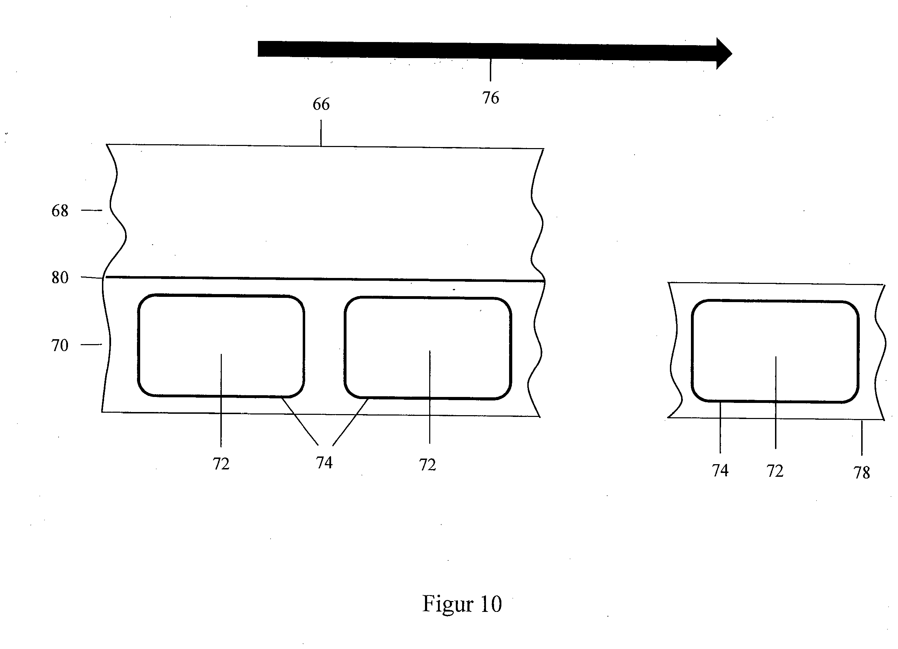

Figur 10 zeigt schematisch das erfindungsgemäße Herstellungsverfahren am Beispiel zur Herstellung von Karten im ID-1-Format. Eine Folie 66 wird von einer Rolle dem Herstellungsverfahren zugeführt. Wie oben beschrieben, wird zuerst die Folie 66 entlang einer Falzkante 80 angeritzt und dann wird auf einer Seite der Folie 66 ein Klebstoff, in Figur 10 nicht dargestellt, auf Bereich 68 oder Bereich 70 aufgebracht. Alternativ kann auch zuerst der Klebstoff auf die Folie 66 aufgetragen werden und dann die Folie 66 angeritzt werden. Hier wird die Folie 66 einmal gefaltet, so daß der Bereich 68 entlang der Falzkante 80 auf den Bereich 70 gefaltet wird. Im Bereich 70 sind Karten 72 im ID-1 Format vorgesehen, welche entlang einer Stanzkontur 74 am Ende des Herstellungsverfahrens aus der Folie 66 ausgestanzt werden. Die Folie 66 wird während der Herstellung in einer Herstellungsrichtung 76 bewegt. Nach dem Falten und Verkleben der Folie 66 ist ein zweischichtiger Verbund 78 entstanden. Der Verbund 78 kann dann weiterverarbeitet werden, indem z.B. ein Design auf eine Seite der Karte 72 aufgedruckt wird. Eine andere Möglichkeit der Weiterverarbeitung des Verbunds 78 wäre z.B., dass aus dem Verbund 78 die Karten 72 am Ende des Herstellungsverfahrens ausgestanzt werden.

## Patentansprüche

1. Verfahren zur Herstellung eines tragbaren Datenträgers mittels eines kontinuierlichen Rolle-zu-Rolle Herstellungsverfahrens, umfassend die Schritte:
Bereitstellen von mindestens einer ersten und einer zweiten Folie jeweils als Rollenware, wobei jede der Folie aus einer Folienlage besteht,
- Abrollen der Folien, wobei auf einer Seite einer der beiden Folien ein Vorder- und Rückseitendesign des Datenträgers gedruckt wird,
- teilweise Beschichtung mit einem Klebstoff der ersten Folie auf einer Seite,
- Anritzen der ersten Folie entlang einer Falzkante auf der anderen Seite,
- passergenaues Zusammenfalten und Verkleben der ersten Folie entlang der Falzkante in Richtung der Seite, welche mit Klebstoff beschichtet ist, sodass die angeritzte Falzkante der Seite gegenüberliegt und sodass die mit Klebstoff beschichtete erste Folie um die zweite Folie gefaltet ist.

2. Verfahren nach einem der vorhergehenden Ansprüche, **dadurch gekennzeichnet, dass** es sich bei dem Klebstoff um einen Schmelzklebstoff handelt.

3. Verfahren nach Anspruch 3, **dadurch gekennzeichnet, dass** der Klebstoff über eine Polykondensationsreaktion unter Einbindung von Wasser aus der Umgebungsluft abbindet.

4. Verfahren nach einem der vorhergehenden Ansprüche, **dadurch gekennzeichnet, dass** zum Drucken ein Digitaldruck verwendet wird.

5. Verfahren nach einem der vorhergehenden Ansprüche, **dadurch gekennzeichnet, dass** in mindestens eine Folie mindestens eine Öffnung eingebracht wird.

6. Verfahren nach einem der vorhergehenden Ansprüche, **dadurch gekennzeichnet, dass** auf mindestens einer Folie mindestens ein elektronisches Bauelement angeordnet ist.

7. Verfahren nach einem der vorhergehenden Ansprüche, **dadurch gekennzeichnet, dass** mindestens ein Datenträger aus mindestens einer gefalteten und verklebten Folie gestanzt wird.

## Claims

1. A method for producing a portable data carrier by means of a continuous roll-to-roll production method, comprising the steps of:
- making available at least one first and one second foil respectively in the form of rolled goods, wherein each of the foils consists of one foil ply,
- unrolling the foils, wherein on one side of one of the two foils there is printed a frontside and back-side design of the data carrier,
- partially coating the first foil on one side with an adhesive,
- scoring the first foil along a fold edge on the other side,
- folding in exact register and adhesively bonding the first foil along the fold line in the direction of the side that is coated with adhesive, so that the scored fold edge is disposed opposite the side and so that the first foil coated with adhesive is folded around the second foil.

2. The method according to any of the preceding claims, **characterized in that** the adhesive is a hot-melt adhesive.

3. The method according to claim 3, **characterized in that** the adhesive is cured via a polycondensation reaction while binding water from the surrounding air.

4. The method according to any of the preceding claims, **characterized in that** for printing digital printing is employed.

5. The method according to any of the preceding claims, **characterized in that** into at least one foil there is incorporated at least one opening.

6. The method according to any of the preceding claims, **characterized in that** on at least one foil there is arranged at least one electronic component.

7. The method according to any of the preceding claims, **characterized in that** at least one data carrier is punched out from at least one folded and adhesively bonded foil.

## Revendications

1. Procédé de fabrication d'un support de données portable au moyen d'un procédé continu de fabrication de rouleau à rouleau, **comprenant les étapes** :
mise à disposition d'au moins un premier et un deuxième film respectivement en tant que produit rouleau, cependant que chacun des films consiste en une couche de film,
- déroulage des films, cependant que, sur une face d'un des deux films, un design de face avant et un design de face arrière du support de données est imprimé,
- revêtement partiel, avec une colle, du premier film sur une face,
- rayage du premier film le long d'un bord de pliage sur l'autre face,
- pliage en repérage et collage du premier film le long du bord de pliage en direction de la face revêtue de colle, de telle sorte que le bord de pliage rayé est situé à l'opposé de la face et de telle sorte que le premier film revêtu de colle est plié autour du deuxième film.

2. Procédé selon une des revendications précédentes, **caractérisé en ce que** la colle consiste en une colle à fusion à chaud.

3. Procédé selon la revendication 3, **caractérisé en ce que** la colle prend par réaction de polycondensation en intégrant de l'eau de l'air ambiant.

4. Procédé selon une des revendications précédentes, **caractérisé en ce que,** pour l'impression, une impression numérique est utilisée.

5. Procédé selon une des revendications précédentes, **caractérisé en ce que,** dans au moins un film, au moins une ouverture est générée.

6. Procédé selon une des revendications précédentes, **caractérisé en ce que,** sur au moins un film, au moins un composant électronique est agencé.

7. Procédé selon une des revendications précédentes, **caractérisé en ce qu'**au moins un support de données est découpé à partir d'au moins un film plié et collé.
